(19) Europäisches Patentamt
European Patent Office
Office européen des brevets

(11) **EP 3 146 204 B1**

(12) **FASCICULE DE BREVET EUROPEEN**

(45) Date de publication et mention de la délivrance du brevet:
**08.07.2020 Bulletin 2020/28**

(21) Numéro de dépôt: **15725881.5**

(22) Date de dépôt: **14.04.2015**

(51) Int Cl.:
*F03H 1/00* (2006.01)  *H01J 27/16* (2006.01)

(86) Numéro de dépôt international:
**PCT/IB2015/052697**

(87) Numéro de publication internationale:
**WO 2015/159208 (22.10.2015 Gazette 2015/42)**

(54) **DISPOSITIF DE FORMATION D'UN FAISCEAU QUASI-NEUTRE DE PARTICULES DE CHARGES OPPOSEES**

VORRICHTUNG ZUR FORMUNG EINES QUASI-NEUTRALEN STRAHLS VON GEGENSÄTZLICH GELADENEN PARTIKELN

DEVICE FOR FORMING A QUASI-NEUTRAL BEAM OF OPPOSITELY CHARGED PARTICLES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.04.2014 FR 1453469**

(43) Date de publication de la demande:
**29.03.2017 Bulletin 2017/13**

(73) Titulaires:
• **Ecole Polytechnique**
  **91120 Palaiseau (FR)**
• **CNRS**
  **Centre National de la Recherche Scientifique**
  **75016 Paris (FR)**

(72) Inventeurs:
• **RAFALSKYI, Dmytro**
  **F-91400 Orsay (FR)**
• **AANESLAND, Ane**
  **F-75014 Paris (FR)**

(74) Mandataire: **Jacobacci Coralis Harle**
  **32, rue de l'Arcade**
  **75008 Paris (FR)**

(56) Documents cités:
**FR-A1- 2 965 697**

• **DUDIN S V ET AL: "Empirical laws of particle extraction from single-grid source of bipolar ion-electron flow", REVIEW OF SCIENTIFIC INSTRUMENTS, AIP, MELVILLE, NY, US, vol. 83, no. 11, 1 novembre 2012 (2012-11-01), pages 113302-113302, XP012161694, ISSN: 0034-6748, DOI: 10.1063/1.4767241 [extrait le 2012-11-27]**
• **RAFALSKYI D ET AL: "Coincident ion acceleration and electron extraction for space propulsion using the self-bias formed on a set of RF biased grids bounding a plasma source", JOURNAL OF PHYSICS D: APPLIED PHYSICS IOP PUBLISHING UK, vol. 47, no. 49, 10 novembre 2014 (2014-11-10), XP020271999, ISSN: 0022-3727**

**Description**

L'invention concerne un dispositif de formation d'un faisceau quasi-neutre de particules de charges opposées.

De tels dispositifs sont notamment utilisés pour des propulseurs à plasma (application aux satellites pour de la correction de trajectoire, sondes spatiales,...), des dispositifs de dépôt de particules sur une cible (dépôt en phase vapeur, par exemple ; domaine de la microélectronique), des dispositifs de gravure de la cible, des dispositifs de traitement de polymères ou encore des dispositifs d'activation de la surface cible.

Typiquement, un tel dispositif comprend une chambre, des moyens pour introduire un gaz ionisable dans la chambre, des moyens pour ioniser le gaz afin de former le plasma et des moyens d'extraction et d'accélération de particules chargées du plasma hors de la chambre.

Dans le domaine de propulsion électrique, il existe différentes techniques pour assurer l'accélération de l'engin muni du dispositif générateur de faisceau plasma, qui est alors assimilé à un propulseur plasma.

Ainsi, pour un propulseur plasma dont le plasma est formé d'ions positifs et d'électrons, on peut extraire et accélérer uniquement les ions positifs hors de la chambre et assurer l'électroneutralité du faisceau d'ions positifs après la sortie de la chambre en injectant des électrons en aval de la sortie de la chambre.

Assurer l'électroneutralité du faisceau en sortie de la chambre est en effet indispensable pour éviter que les engins spatiaux ne se chargent électriquement, le courant du faisceau d'ions n'étant notamment pas limité par la charge spatiale.

Ce type de propulseur plasma présente cependant l'inconvénient de mettre en oeuvre une source annexe d'électrons pour assurer cette électroneutralité, source annexe qui est généralement à l'origine d'un manque de fiabilité.

Pour assurer cette électroneutralité en augmentant la fiabilité (donc s'affranchir de la source annexe d'électrons), plusieurs voies ont été envisagées.

Une première voie est de produire un plasma comportant des ions positifs, des ions négatifs et des électrons et de filtrer les électrons, au sein de la chambre, pour n'obtenir au niveau de la sortie de la chambre que ou quasiment que des ions positifs et négatifs. Les particules de charges opposées du faisceau sont ainsi formées d'ions positifs et d'ions négatifs.

Une deuxième voie est de produire un plasma comportant des ions positifs et des électrons et de prévoir des moyens pour extraire et accélérer les ions positifs et les électrons en sortie de la chambre pour assurer cette électroneutralité. Les particules chargées du faisceau sont ainsi formées d'ions positifs et d'électrons.

Des solutions correspondant à la première voie décrite ci-dessus sont proposées dans les documents WO 2007/065915, WO 2010/060887 ou encore WO 2012/042143.

Toutes ces solutions doivent mettre en œuvre un gaz ionisable électronégatif apte à générer des ions positifs, négatifs et des électrons ainsi qu'un moyen de filtrage des électrons pour n'obtenir, au niveau de la sortie de la chambre que ou pratiquement que, des ions positifs et négatifs.

Dans le document WO 2007/065915, on utilise, comme moyen d'extraction et d'accélération, deux grilles 3, 4 en contact avec le plasma qui sont situées en sortie de la chambre dans un même plan (l'un en haut, l'autre en bas) dont l'une est polarisée négativement et dont l'autre est polarisée positivement.

La figure 1 est un schéma représentatif du dispositif proposé dans WO 2007/065915. Sur cette figure, la chambre 1 comprend un plasma avec des ions positifs A$^+$, des ions négatifs A$^-$ et des électrons e$^-$. Le moyen de filtrage des électrons porte la référence 2.

Une extraction et une accélération simultanée des ions positifs et négatifs est ainsi obtenue, assurant l'électroneutralité du faisceau d'ions après la sortie de la chambre

Cependant, cette solution est délicate à mettre en œuvre en raison de la présence de grilles présentant des polarisations opposées. En effet, la présence de ces grilles de polarisations opposées peut impliquer des courbures significatives des faisceaux issues de chaque grille.

Le document WO 2010/060887 propose une solution améliorée par rapport à celle du document WO 2007/065915, pour laquelle deux gaz différents sont prévus à la place d'un seul dans WO 2007/065915. L'un de ces gaz est électronégatif et l'autre peut être soit électropositif, soit électronégatif.

Dans le document WO 2012/042143, on propose de mettre en oeuvre une grille 5 d'extraction et d'accélération alimentée par une source de tension alternativement positive et négative, par l'intermédiaire de la source de tension 6. A cette grille 5 est associée une autre grille 7 qui est mise à la masse 8.

Lorsque l'on applique un potentiel positif sur la grille 5, le potentiel plasma devient positif et les ions positifs A$^+$ sont en conséquence accélérés en direction de l'autre grille 7, qui est à la masse. En effet, dans ces conditions, une gaine positive se forme au niveau des grilles 5, 7, ce qui permet l'accélération des ions positifs. La gaine est un espace qui est formé entre chaque grille 5, 7 et le plasma où la densité des ions positifs diffère de la densité des ions négatifs. Dans ces conditions, l'extraction et l'accélération des ions négatifs est bloquée.

Puis, lorsque l'on applique un potentiel négatif sur la grille 5, le potentiel plasma devient négatif et les ions négatifs A$^-$ sont accélérés en direction de l'autre grille 7. Plus précisément, après avoir appliqué un potentiel positif sur la grille 5, la gaine positive disparaît rapidement (1 microseconde environ) et il se forme une gaine négative sous l'effet de la polarisation négative de cette grille 5. Dans ces conditions, l'extraction et l'accélération des ions positifs est bloquée.

En fonction de la polarisation de la grille 5, on peut ainsi accélérer et extraire soit les ions positifs soit les ions négatifs.

Un schéma représentatif du dispositif proposé dans le document WO 2012/042143 est représenté sur la figure 2(a). Le gaz électronégatif est noté $A_2$ et le moyen de filtrage des électrons 2. RF' désigne ici le moyen qui permet de générer le plasma à partir du gaz électronégatif $A_2$ injecté dans la chambre 1. Il s'agit d'une source de champ magnétique alternative sinusoïdale émettant dans le domaine des radiofréquences.

Ici, on n'a pas l'inconvénient d'avoir deux grilles de polarisation opposées, comme dans les documents WO 2007/065915 et WO 2010/060887. Cependant, les ions positifs $A^+$ et négatifs $A^-$ étant extraits successivement, il est proposé d'optimiser la forme du signal de tension généré par la source de tension alternative 6 reliée à la grille 5 pour assurer au mieux l'électroneutralité du faisceau d'ions en sortie de la chambre. Cette source de tension 6 alternative peut mettre à profit les mesures d'une sonde S dans le faisceau de sortie et/ou le signal RF' servant à générer le plasma.

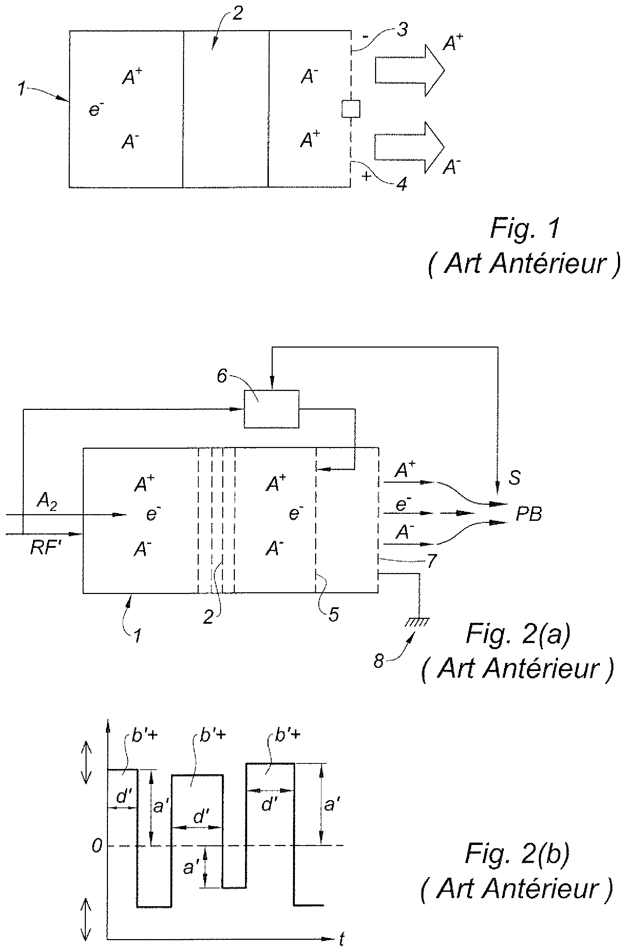

Ce signal optimisé est représentée sur la figure 2(b).

Avec ce signal optimisé, une bonne électroneutralité du faisceau est obtenue en sortie de la chambre 1, mais seulement en moyenne.

En effet, le fait d'extraire successivement les ions positifs, puis les ions négatifs et inversement ne permet pas toujours d'obtenir un faisceau constamment neutre. En conséquence, le potentiel du propulseur varie dans le temps, en fonction de la forme du signal représenté sur la figure 2(b).

Par ailleurs, il convient de noter que tous les dispositifs d'extraction ions-ions, l'utilisation d'un gaz électronégatif, qui est généralement hautement réactif (présence de fluorine, chlorine,...), limite la durée de vie du dispositif.

De plus, les solutions proposées dans les documents WO 2007/065915 (figure 1), WO 2010/060887 et sur les figues 2(a) et 2(b) (WO 2012/042143) sont limitées à l'extraction ions-ions, mais ne peuvent pas être envisagées pour l'extraction ions-électrons.

Une autre solution correspondant à la deuxième voie décrite ci-dessus est proposée dans l'article de S.V. Dudin & D.V. Rafalskyi, « On the simultaneous extraction of positive ions and electrons from single-grid ICP source », A letters Journal Exploring the frontiers of Physics, EPL, 88(2009) 55002, p1-p4.

Cette solution consiste à mettre en œuvre une électrode 9 dans le cœur de la chambre 1 (donc au sein du plasma), l'électrode 9 étant alimentée par une source de tension radiofréquence 10 (RF ; source de tension alternative sinusoïdale à une fréquence comprise dans la gamme des radiofréquences) par l'intermédiaire d'un condensateur 11 et de lui associer une grille 7", située en sortie de la chambre 1, en contact avec le plasma et reliée à la masse 8.

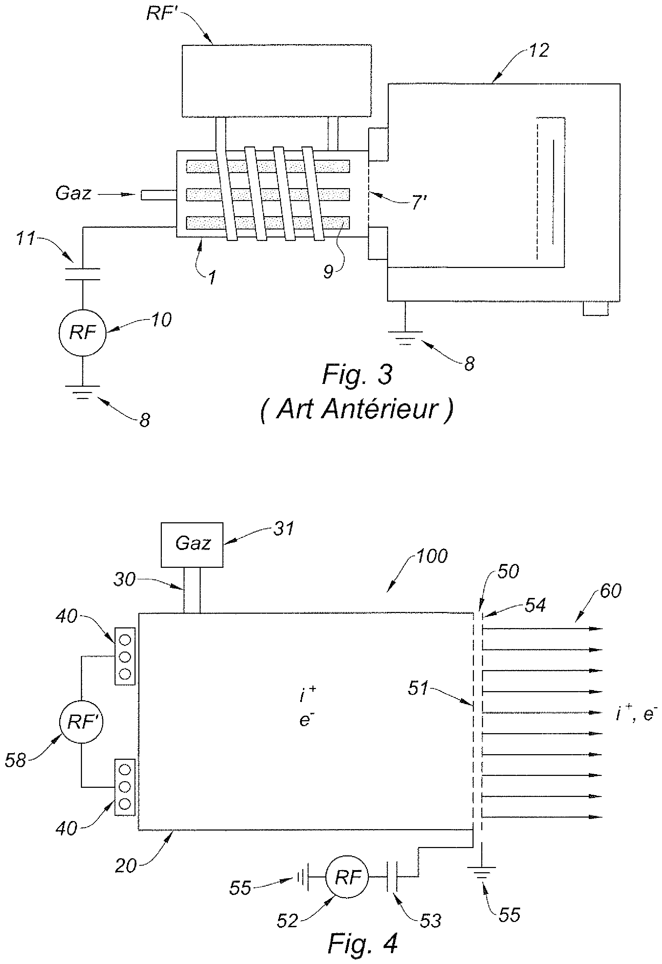

On pourra se reporter à la figure 3, qui est un schéma représentatif du dispositif. Sur cette figure 3, RF' représente une source radiofréquence (par exemple une ou plusieurs bobine(s)) pour ioniser le gaz et former ainsi un plasma comportant des ions positifs et des électrons. Le moyen 12 est une chambre mise sous vide dans laquelle sont installés des moyens permettant de caractériser le faisceau d'ions issu de la chambre 1, lesquels n'interviennent pas dans l'extraction et l'accélération des ions.

Le fonctionnement du dispositif est le suivant.

Par construction, l'électrode 9 présente une surface nettement supérieure à celle de la grille 7" située en sortie de la chambre 1 et reliée à la masse 8.

De manière générale, l'application d'une tension RF sur une électrode présentant une surface plus grande que la grille 7" a pour effet de générer au niveau de l'interface entre l'électrode 9 et le plasma d'une part, et au niveau de l'interface entre la grille 7" et le plasma d'autre part, une différence de potentiel additionnelle, s'ajoutant à la différence de potentiel RF. Cette différence de potentiel totale se répartit sur une gaine. Ici, la gaine est un espace qui est formé entre la grille 7" ou l'électrode 9 d'une part et le plasma d'autre part où la densité d'ions positifs est plus élevée que la densité d'électrons. Cette gaine présente une épaisseur variable en raison du signal RF appliqué à l'électrode.

En pratique, la majeure partie de l'effet de l'application d'un signal RF sur l'électrode 9 est cependant située dans la gaine de la grille 7" (on peut voir le système électrode-grille comme un condensateur avec deux parois asymétriques, dans ce cas la différence de potentiel s'applique sur la partie de plus faible capacitance donc de plus faible surface).

En présence du condensateur 11 en série avec la source RF, 10, l'application du signal RF a pour effet de convertir la tension RF en tension constante DC en raison de la charge du condensateur 11, principalement au niveau de la gaine de la grille 7".

Cette tension constante DC dans la gaine de la grille 7" implique que les ions positifs sont constamment accélérés. En effet, cette différence de potentiel DC a pour effet de rendre le potentiel plasma positif. En conséquence, les ions positifs du plasma sont constamment accélérés en direction de la grille 7" (à la masse) et extrait de la chambre 1 par cette grille 7". L'énergie des ions positifs correspond à cette différence de potentiel DC (énergie moyenne).

La variation de la tension RF, 10 permet de faire varier la différence de potentiel RF + DC entre le plasma et la grille 7". Au niveau de la gaine de la grille 7", cela se traduit par une évolution de l'épaisseur de cette gaine. Lorsque cette épaisseur devient inférieure à une valeur critique, ce qui arrive pendant un laps de temps à intervalles réguliers donnés par la fréquence du signal RF, la différence de potentiel entre la grille et le plasma approche la valeur zéro (donc le potentiel plasma approche la valeur zéro, la grille étant à la masse), ce qui permet d'extraire des électrons.

En pratique, le potentiel plasma en-dessous duquel les électrons peuvent être accélérés et extraits (= potentiel critique) est donné par la loi de Child, laquelle relie ce potentiel critique à l'épaisseur critique de la gaine en-dessous de laquelle cette gaine disparaît (« sheath collapse » selon la terminologie anglo-saxonne).

Tant que le potentiel plasma est inférieur au potentiel critique, alors il y a une accélération et une extraction simultanée des électrons et des ions.

Bien que l'extraction d'électrons ne soit envisageable que sur un certain laps de temps pendant une période du signal RF appliqué à l'électrode 9, cet article montre la possibilité d'une compensation complète de la charge positive des ions et donc une bonne étectroneutratité du faisceau en sortie de la chambre plasma.

Par ailleurs, on obtient une accélération et une extraction quasi-simultanée des ions positifs et des électrons au cours d'une période du signai RF, contrairement à la solution proposée dans WO 2012/042143, que ce soit pour l'extraction ions-ions ou l'extraction ions-électrons.

La technique proposée dans cet article est donc très différente de celles qui sont proposées dans les documents WO 2007/065915, WO 2010/060887 et WO 20121042143 (notamment celui de la figure 3, pour l'extraction ions - électrons), en mettant en œuvre une seule grille (à la masse) en contact du plasma et un condensateur 11, qui apporte une composante continue à la différence de potentiel dans la gaine, en série avec une source 10 de tension RF.

Un inconvénient de cette technique est qu'il y a beaucoup de pertes d'ions positifs accélérés, c'est-à-dire d'ions positifs accélérés à haute énergie, mais qui ne passent pas par les orifices de la grille. Ceci provoque une usure plus rapide de la grille et limite en conséquence la durée de vie de cette grille. Dans le cas d'une application à un propulseur plasma (satellite, sonde spatiale,...), cet inconvénient peut devenir critique. En pratique, pour limiter cet inconvénient, il convient donc de mettre en œuvre des ions dont l'énergie est inférieure à 300eV.

Par ailleurs, cette technique ne peut pas fonctionner pour l'extraction et l'accélération ions-ions.

Un objectif de l'invention est de proposer un dispositif de formation d'un faisceau d'ions positifs et d'électrons présentant une bonne électroneutralité et une efficacité d'extraction améliorée par rapport aux dispositifs connus.

L'amélioration de l'efficacité se traduit notamment par une durée de vie du dispositif qui peut être améliorée pour une énergie d'extraction donnée.

Un autre objectif de l'invention est de proposer un tel dispositif capable, en outre, d'extraire des ions avec une énergie accrue par rapport aux dispositifs connus.

Pour atteindre l'un au moins de ces objectifs, l'invention propose un dispositif de formation d'un faisceau quasi-neutre d'ions et d'électrons, comprenant :

- une chambre,
- un ensemble de moyens pour former un plasma ions - électrons dans cette chambre ;
- un moyen d'extraction et d'accélération des particules chargées du plasma hors de la chambre aptes à former ledit faisceau, ledit moyen d'extraction et d'accélération comprenant un ensemble d'au moins deux grilles situées à une extrémité de la chambre ;
- une source de tension alternative radiofréquence adaptée pour générer un signal dont la radiofréquence est comprise entre la fréquence plasma des ions et la fréquence plasma des électrons, ladite source de tension radiofréquence étant disposée en série avec un condensateur et connectée, par l'une de ses sorties et par l'intermédiaire de ce condensateur, à l'une au moins des grilles dudit ensemble d'au moins deux grilles, au moins une autre grille dudit ensemble d'au moins deux grilles étant soit mise à un potentiel de référence, soit connectée à l'autre des sorties de la source de tension radiofréquence.

Ce dispositif pourra comprendre, en outre, les caractéristiques suivantes, prises seules ou en combinaison :

- l'ensemble de moyens pour former le plasma ions - électrons comprend une ou plusieurs bobine(s) alimentée(s) par une source de tension alternative radiofréquence ;
- la source de tension radiofréquence alimentant la ou chaque bobine est la même que la source de tension radiofréquence en série avec le condensateur qui sont connectés à l'une au moins des deux grilles, le dispositif comprenant en outre un moyen pour gérer le signal fourni par la ladite source en direction d'une part, du ou de chaque bobine et d'autre part, de ladite au moins une grille ;
- l'ensemble de moyens pour former le plasma ions - électrons dans la chambre comprend un réservoir comportant au moins un gaz électropositif ;
- les grilles présentent des orifices circulaires, dont le diamètre est compris entre 0,5mm et 10mm, par exemple entre 1mm et 2mm ;
- la distance entre les deux grilles est comprise entre 0,5mm et 10mm, par exemple entre 1mm et 2mm ;

- les grilles présentent des orifices en forme de fente ;
- l'électroneutralité du faisceau d'ions et d'électrons est obtenue au moins en partie par réglage de la durée d'application des potentiels positifs et/ou négatifs issus de la source de tension alternative radiofréquence ;
- l'électroneutralité du faisceau d'ions et d'électrons est obtenue au moins en partie par réglage de l'amplitude des potentiels positifs et/ou négatifs issus de la source de tension alternative radiofréquence ;
- la source de tension alternative radiofréquence est agencée pour produire un signal rectangulaire ;
- la source de tension alternative radiofréquence est agencée pour produire un signal sinusoïdal.

Un objectif plus complet de l'invention est d'obtenir un dispositif qui permet en outre d'extraire et d'accélérer des ions négatifs et des ions positifs, tout en assurant une bonne électroneutralité du faisceau.

Pour atteindre cet objectif, l'invention propose également un dispositif de formation d'un faisceau quasi-neutre de particules de charges opposées, comprenant:

- un dispositif de formation d'un faisceau quasi-neutre d'ions et d'électrons selon l'invention ;
- un ensemble de moyens pour former un plasma ions-ions dans la chambre, ledit ensemble comportant un moyen de filtrage des électrons;
- une source de tension alternative dite basse fréquence qui est adaptée pour générer un signal dont la radiofréquence est inférieure ou égale à la fréquence plasma des ions;
- un moyen apte à connecter l'une des grilles soit, à la source de tension basse fréquence tout en activant le moyen de filtrage des électrons afin de former un faisceau ions-ions soit, à la source de tension radiofréquence en série avec le condensateur tout en désactivant le moyen de filtrage des électrons pour former un faisceau ions-électrons.

Le dispositif de formation d'un faisceau quasi-neutre de particules de charges opposées pourra, en outre, comprendre les caractéristiques suivantes, prise seules ou en combinaison :

- l'électroneutralité du faisceau ions-ions est obtenue au moins en partie par réglage de la durée d'application des potentiels positifs et/ou négatifs issus de la source de tension alternative basse fréquence ;
- l'électroneutralité du faisceau ions-ions est obtenue au moins en partie par réglage de l'amplitude des potentiels positifs et/ou négatifs issus de la source de tension alternative basse fréquence ;
- la source de tension alternative basse fréquence est agencée pour produire un signal rectangulaire ;
- l'ensemble de moyens pour former un plasma ions-ions dans la chambre comprend un réservoir comportant au moins un gaz électronégatif.

Enfin, il convient de noter que les gaz utilisables peuvent être choisis, en fonction de leur électropositivité ou électronégativité, parmi l'argon (Ar), l'hydrazine ($N_2H_4$), le xénon (Xe), le tétrafluorure de carbone ($CF_4$), l'hexafluorure de soufre ($SF_6$), le diiode ($I_2$), le diazote ($N_2$) ou le dihydrogène ($H_2$).

L'invention sera mieux comprise et d'autres buts, avantages et caractéristiques de celle-ci apparaîtront plus clairement à la lecture de la description qui suit et qui est faite au regard des figures annexées, sur lesquelles :

- la figure 4 est un schéma représentatif d'un premier mode de réalisation de l'invention, avec lequel il est possible d'extraire et d'accélérer des ions positifs et des électrons ;
- la figure 5 est un schéma électrique équivalent du dispositif représenté sur la figure 4 ;
- la figure 6 représente un signal de tension RF qu'il est envisageable d'appliquer à une grille du dispositif de la figure 4 par l'intermédiaire d'un condensateur en série avec la source RF, ce signai de tension correspond sensiblement au potentiel plasma ;
- la figure 7 est une variante de réalisation du dispositif proposé sur la figure 4 ;
- la figure 8 représente une autre variante de réalisation du dispositif proposé sur la figure 4 ;
- la figure 9 est un schéma représentatif d'un deuxième mode de réalisation de l'invention, avec lequel il est possible d'extraire et d'accélérer soit des ions positifs et des ions négatifs soit des ions positifs et des électrons d'autre part ;
- la figure 10 est un schéma d'une installation d'essais permettant de tester le dispositif selon l'invention qui est conforme à celui de la figure 4;
- les figures 10(a) à 10(c) montrent quelques résultats de mesures obtenus avec l'installation d'essais de la figure 10 dans le cas d'un régime ions-électrons;
- la figure 11 fournit des résultats de mesures obtenus avec le dispositif conforme à celui de la figure 9, avec les moyens de mesure représentés sur la figure 10.

Un premier mode de réalisation de l'invention est décrit ci-après à l'appui de la figure 4.

Le dispositif 100 comprend une chambre 20 dans laquelle peuvent être introduits un gaz, par exemple stocké dans un réservoir 31, susceptible de former un plasma comportant des ions et des électrons, cette introduction s'effectuant par l'intermédiaire du moyen 30, tel qu'un conduit, relié au réservoir 31 pour introduire ce gaz dans la chambre 20. Il comprend également des moyens 40, 58 pour ioniser le gaz afin de former le plasma. Par exemple, les moyens 40 peuvent être formés de bobines alimentées par une source de radiofréquence 58. A la place, on pourrait prévoir d'autres moyens 40, 58 connus de l'homme du métier, à savoir à tire d'exemples non limitatifs, une source microonde 58 avec un résonateur 40 ou encore une source de courant continu 58 avec des électrodes.

Le dispositif 100 comprend enfin des moyens 50 d'extraction et d'accélération des ions positifs et des électrons hors de la chambre 20. Cette extraction/accélération permet de former, en sortie de la chambre, un faisceau 60.

Les moyens 50 d'extraction et d'accélération comprennent un ensemble d'au moins deux grilles 51, 54 disposées à l'extrémité de la chambre 20. Une première grille 51 est connectée à une source de tension alternative à une fréquence comprise dans la gamme des radiofréquences, ci-après nommée source radiofréquence RF, 52, par l'intermédiaire d'un condensateur 53. Le condensateur 53 est disposé en série avec la source radiofréquence RF, 52. Une deuxième grille 54 est mise à un potentiel de référence 55, par exemple la masse.

En pratique, pour certaines applications, le potentiel de référence pourra être la masse. Pour autant, pour d'autres applications, par exemple dans le domaine spatial, le potentiel de référence pourra être celui du satellite ou de la sonde concernée.

Dans la suite de la description relative à ce premier mode de réalisation, le potentiel de référence sera, sauf indication contraire, considéré comme étant la masse.

La source RF, 52 est réglée pour définir une pulsation $\omega_{RF}$ telle que

$$\omega_{pi} \leq \omega_{RF} \leq \omega_{pe}, \text{ où } \omega_{pe} = \sqrt{\frac{e_0^2 n_p}{\varepsilon_0 m_e}} \text{ est la pulsation plasma des électrons et } \omega_{pi} = \sqrt{\frac{e_0^2 n_p}{\varepsilon_0 m_i}} \text{ est la pul-}$$

sation plasma des ions positifs ;

avec :

- $e_0$, la charge de l'électron,
- $\varepsilon_0$, la permittivité du vide,
- $n_p$, la densité du plasma,
- $m_i$, la masse de l'ion, et
- $m_e$, la masse de l'électron.

Il convient de noter que $\omega_{pi}$ ; << $\omega_{pe}$ du fait que $m_i >> m_e$.

De manière générale, la fréquence du signal fourni par la source RF, 52 peut être comprise entre quelques MHz et quelques centaines de MHz, en fonction du gaz employé pour la formation du plasma dans la chambre 20 et ce, pour être comprise entre la fréquence plasma des ions et la fréquence plasma des électrons.

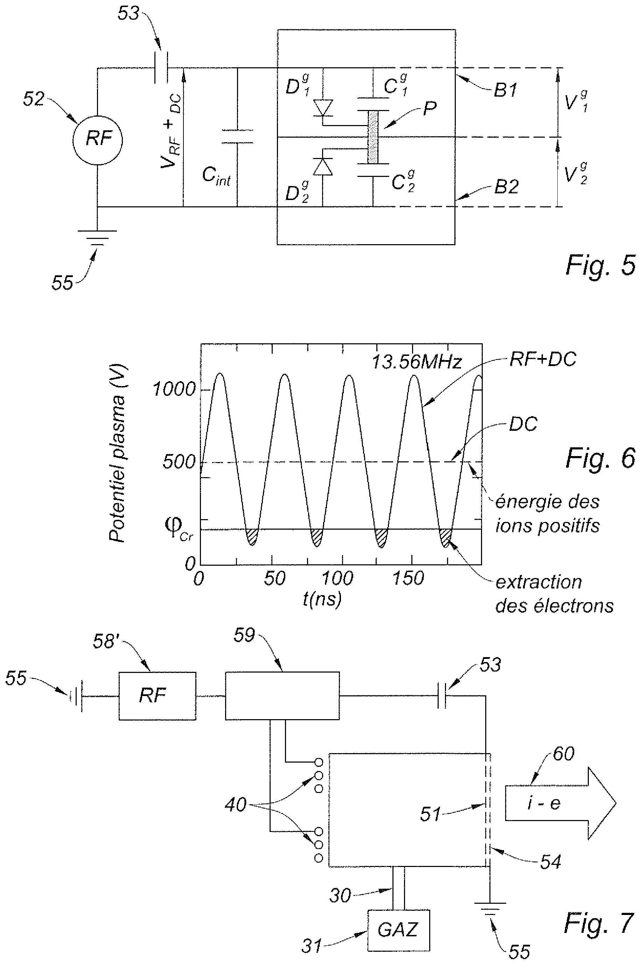

Le dispositif conforme à l'invention représenté sur la figure 4 peut être associé, de façon simplifié, au schéma équivalent de la figure 5.

Sur ce schéma, on reconnaît la source RF 52, le condensateur 53 en série avec cette source et la masse 55.

La référence P représente le plasma.

$C_{int}$ représente la capacité entre les deux grilles 51, 54.

Le bloc B1 représente l'effet de la gaine qui se forme entre le plasma et la première grille 51, laquelle peut être représentée par une diode $D_1^g$ en parallèle avec une capacité $C_1^g$. Le bloc B2 représente l'effet de la gaine qui se forme entre le plasma et la deuxième grille 54, laquelle peut être associée à une diode $D_2^g$ en parallèle avec une capacité $C_2^g$.

L'existence d'une fonction diode, pour chacun des blocs B1 ou B2, est liée au fait que les ions ne peuvent pas suivre l'évolution instantanée du champ électrique entre les grilles, imposé par la variation radiofréquence du signal provenant de la source radiofréquence 52, mais seulement la valeur moyenne de ce champ alors que les électrons peuvent suivre l'évolution instantanée de ce champ électrique. Ceci provient du fait que la masse des électrons ($m_e$) est très faible par rapport à la masse ($m_i$) des ions positifs ($m_e << m_i$) et que la fréquence du signal imposé par la source 52 (radiofréquence ; pulsation $\omega_{RF}$) est choisie pour être entre la fréquence plasma des ions et la fréquence plasma des électrons, à savoir, $\omega_{pi} \leq \omega_{RF} \leq \omega_{pe}$.

De ce fait, lorsqu'on applique une tension RF ($V_{RF}$) par l'intermédiaire de la source 52, le condensateur 53 se charge.

Cette charge du condensateur 53 produit alors une tension DC continue aux bornes du condensateur. On obtient finalement une tension $V_{RF}$ + DC, aux bornes de l'ensemble formé par la source RF, 52 en série avec le condensateur (figure 5).

La partie constante DC de la tension $V_{RF}$ + DC, permet alors de définir du champ électrique entre les deux grilles 51, 54, la valeur moyenne du seul signal $V_{RF}$ étant nulle. Cette valeur DC permet donc d'extraire et d'accélérer les ions positifs à travers les deux grilles 51, 54, en continu.

Par ailleurs, les capacités $C_1^g$ et $C_2^g$ sont très différentes en raison de la disposition des grilles 51, 54 dans le dispositif. En effet, du point de vue des ions positifs ou des électrons présents dans le plasma, la deuxième grille 54, en aval par rapport à la première grille 51, relativement à la direction de propagation du faisceau 60, présente une surface effective $S_2^g$ bien plus faible que la surface effective $S_1^g$ de la première grille 51 puisque la deuxième grille 54 n'est visible, pour le plasma, qu'à travers les orifices de la première grille 51, à savoir $S_1^g \gg S_2^g$. Cela se traduit donc par l'inégalité $C_1^g \gg C_2^g$, même pour des grilles 51, 54 identiques. En pratique, l'ensemble de deux grilles 51, 54 permet donc de former un condensateur avec des surfaces asymétriques.

De ce fait, lorsqu'on applique une tension RF ($V_{RF}$) par l'intermédiaire de la source 52, la tension $V_{RF}$ + DC aux bornes de l'ensemble formé par la source RF 52 en série avec le condensateur 53 s'exprime

$$V_{RF} + DC = V_1^g + V_2^g \cong V_2^g$$, car $C_1^g \gg C_2^g$, où $V_1^g$ représente la différence de potentiel dans la gaine formée entre le plasma et la première grille 51 et $V_2^g$ représente la différence de potentiel dans la gaine formée entre le plasma et la deuxième grille 54.

La première grille 51 à laquelle est appliquée le signal RF, 52 via le condensateur 53 est en contact avec le plasma et interagit avec celui-ci. Le potentiel plasma suit le potentiel imprimé à la première grille 51, à savoir $V_{RF}$ + DC.

Quant à la deuxième grille 54, à la masse 55, elle est également en contact avec le plasma mais seulement pendant les brefs intervalles temporels pendant lesquels les électrons sont extraits en même temps que les ions positifs, à savoir lorsque $V_2^g = V_{RF} + DC$ est inférieur à une valeur seuil $\phi_{cr}$ en dessous de laquelle la gaine disparaît (« sheath collapse » selon la terminologie anglo-saxonne).

Cette valeur seuil $\phi_{cr}$ est définie par la loi de Child. Cette loi s'exprime de la façon suivante :

$$\text{où} : S = \sqrt{\frac{4}{9} \varepsilon_0 \frac{\phi_{cr}^{3/2}}{j_i} \sqrt{\frac{2e_0}{m_i}}} \qquad \text{(Eq. 1)}$$

s, est l'épaisseur de la gaine à laquelle celle-ci devient inférieure à la dimension des orifices de la grille ;
$\varepsilon_0$, la permittivité du vide ;
$e_0$, la charge de l'électron ;
$m_i$, la masse d'un ion ; et
$j_i$, la densité de courant des ions.

Le fonctionnement du dispositif 100 est représenté sur la figure 6.

La figure 6 représente un exemple d'évolution du potentiel plasma en fonction du temps, liée à l'application d'une tension RF, 52 via le condensateur 53 sur la première grille 51.

La ligne en pointillés représente la composante constante DC, ici de 550V, qui est liée à la présence du condensateur 53. Cette composante définit l'énergie des ions positifs présents dans le plasma qui sont constamment extraits et accélérés par les deux grilles 51, 54.

Le potentiel plasma varie cependant entre des valeurs extrémales (+1050V ; 50V) autour de la composante constante (550V, ici) en raison du signal RF fournit par la source 52.

Lorsque le potentiel plasma atteint le potentiel critique à partir duquel la gaine disparaît, les électrons sont extraits et accélérés à travers les grilles 51, 54 avec les ions positifs.

Ici, $\phi_{cr} \cong 200V$.

Ceci peut être obtenu avec des grilles 51, 54 identiques dont les orifices, circulaires, présentent un diamètre de 1,5mm (permet de définir la valeur de s dans (Eq.1)), la distance entre les deux grilles étant comparable au diamètre d'un orifice de grille. Le gaz utilisé est de l'argon. La densité de courant des ions, associée à ces orifices et à ce gaz, est de 5mA/cm$^2$.

On note sur cette figure que la fréquence du plasma est de 13,56 MHz, pour s'assurer que $\omega_{pi} \leq \omega_{RF} \leq \omega_{pe}$.

L'électroneutralité du faisceau 60 en sortie de la chambre 20 est obtenue grâce à l'extraction des électrons à travers les deux grilles 51, 54 lorsque la gaine présente au niveau de la première grille 51 disparaît.

Au-delà de l'exemple associé à la figure 6, il convient de noter que le dimensionnement des grilles 51, 54 dépendra donc du gaz utilisé, de la densité de courant d'ions qu'on souhaite obtenir, conformément à la loi de Child.

Généralement, on utilisera des grilles 51, 54 identiques. Chaque grille 51, 54 peut présenter des orifices circulaires dont le diamètre est compris entre 1mm et 2mm. La distance entre les deux grilles 51, 54 est alors située dans la même gamme de valeurs que le diamètre des orifices.

En variante, chaque grille 51, 54 pour présenter des orifices en forme de fente.

Il convient de relever plusieurs différences entre le mode de réalisation conforme à l'invention (figures 4 et 5) par rapport à l'article précité (figure 3), tant sur le plan de la structure que du fonctionnement.

Contrairement à l'article précité (figure 3), ce n'est pas au niveau de la grille 54 qui est reliée à la masse 55 qu'il y a, la plupart du temps, une interaction avec le plasma et la formation d'une gaine d'épaisseur variable.

Sur le plan de la structure, le dispositif 100 selon l'invention diffère du dispositif proposé dans l'article S.V. Dudin & D.V. Rafalskyi, par le fait qu'il met en œuvre des moyens d'extraction et d'accélération des ions positifs et des électrons basés sur deux grilles 51, 54 situées en sortie de la chambre et non sur une seule, coopérant avec une électrode au cœur du plasma.

Sur le plan du fonctionnement, le fait d'utiliser deux grilles 51, 54 en sortie de la chambre modifie le fonctionnement de l'extraction et de l'accélération, par rapport à l'article précité (figure 3).

En effet, si une gaine se forme au niveau de la première grille 51, dont l'épaisseur varie en fonction du potentiel plasma, la différence de potentiel avec le plasma dans la gaine est faible du fait que le potentiel plasma suit le potentiel appliqué à la première grille 51.

La différence de potentiel constante DC s'applique donc entre les deux grilles 51, 54 et non, comme c'est le cas pour l'article précité au niveau de la grille reliée à la masse. L'accélération des ions positifs provient de cette différence de potentiel DC prenant place entre les deux grilles 51, 54.

En conséquence, la trajectoire des ions positifs est mieux contrôlée et beaucoup moins d'ions positifs viennent frapper la première grille 51. Ces ions positifs ne viennent pas plus frapper la paroi de la deuxième grille 54, qui n'est visible du point de vue de ces ions, qu'à travers les orifices de la première grille 51.

Par ailleurs, lorsque la gaine disparaît (potentiel plasma inférieur ou égal au potentiel critique), les électrons sont dirigés à travers les orifices de la première grille 51 et ont également peu tendance à frapper la paroi de la deuxième grille 54, qui n'est visible, du point de vue des électrons qu'à travers les orifices de la première grille 51. La trajectoire des électrons est donc bien contrôlée.

On peut donc envisager un dispositif présentant une durée de vie nettement améliorée ou mettant en œuvre des ions positifs avec une énergie plus importante que dans l'article précité (figure 3).

Le fonctionnement des moyens d'extraction et d'accélération formé d'un ensemble d'au moins deux grilles 51, 54 selon l'invention diffère également des moyens à deux grilles 5', 7' proposés dans le document WO 2012/042143 (figure 3 ; extractions ions positifs - électrons).

En effet, le signal alternatif imprimé à la grille 5' est centré sur la valeur nulle (absence de condensateur). Aucune composante constante DC ne prend donc place dans ce dispositif entre les deux grilles 5', 7' dont la différence de potentiel n'est liée qu'à la seule variation du signal variable imprimé à la grille 5'. Aucune extraction constante des ions positifs n'est possible dans WO 2012/042143, mais seulement une extraction successive des ions positifs et des électrons.

La figure 7 représente une variante de réalisation du dispositif 100 représenté sur la figure 4, dans lequel la source radiofréquence 52 n'est pas mise en œuvre. Dans ce cas, une source radiofréquence 58' utilisée pour activer les moyens 40, des bobines par exemple, est également mise à profit pour alimenter la grille 51. Il convient alors de prévoir un moyen 59 de pour gérer le signal fourni par la ladite source en direction d'une part, du moyen 40, par exemple une ou plusieurs bobine(s) et d'autre part, de la grille 51. Cette conception peut s'avérer intéressante pour les applications spatiales car elle diminue les risques de défaut de l'ensemble du dispositif 100.

Sur les figures 4, 5 et 7, on a représenté le cas où la grille 51 est connectée à la source RF, 52 (figures 4 et 5), 58' (figure 7) en série avec le condensateur 53 et l'autre grille 54, mise à un potentiel de référence, par exemple la masse. Dans ce cas, l'une des sorties de la source RF, 52 (ou 58', sur la figure 7) est mise à un potentiel de référence, par exemple la masse. Pour assurer le fonctionnement du dispositif, il importe cependant peu de savoir quelle sortie de la source RF, 52 est connectée à quelle grille 51, 54. En d'autres termes, la grille 51 pourrait être mise à un potentiel de référence et l'autre grille 54 connectée à la source RF, 52 (figures 4 et 5) ou 58' (figure 7) en série avec le condensateur 53.

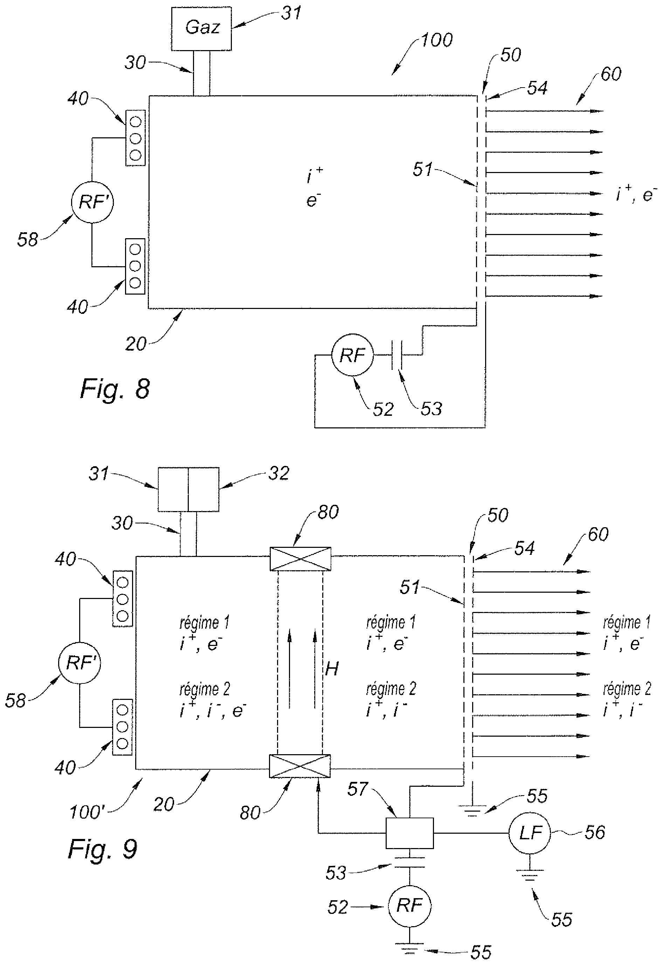

La figure 8 représente une autre variante de réalisation du dispositif 100 représenté sur la figure 4.

Dans cette variante, la source radiofréquence RF, 52 est connectée aux deux grilles 51, 54. Plus précisément, la source radiofréquence RF, 52 est disposée en série avec le condensateur 53 et connectée, par l'une de ses sorties et par l'intermédiaire de ce condensateur 53, à l'une 51 des deux grilles 51, 54. Autrement dit, l'une des sorties de la source RF, 52 est connectée au condensateur 53, ce dernier étant lui-même connecté à l'une 51 des deux grilles 51, 54. Quant à l'autre sortie de la source RF, 52 elle est alors connectée à l'autre 54 des deux grilles 51, 54. Sur la figure 8, c'est la grille 51 qui est connectée au condensateur 53, mais on pourrait tout aussi bien connecter le condensateur 53 à la grille 54 et la grille 51 à la sortie de la source radiofréquence RF, 52 qui n'est pas connectée au condensateur 53.

En outre, il convient de noter qu'on pourrait prévoir une telle variante pour le dispositif 100 représenté sur la figure 7. Dans ce cas, c'est la source radiofréquence RF, 58' qui est connectée aux deux grilles 51, 54, conformément à la description du paragraphe précédent.

Cette variante n'implique donc pas de potentiel de référence.

Dans le domaine spatial, une telle connexion assure une absence de courants parasites circulant entre d'une part, les parties conductrices externes du satellite ou de la sonde spatiale et d'autre part, le dispositif d'extraction des particules de charges opposées proprement dit.

Enfin, le signal appliqué à la grille concernée pourra être un signal obtenu au moins en partie par réglage de la durée d'application des potentiels positifs et/ou négatifs issus de la source de tension alternative radiofréquence RF, 52, 58' et ce, pour améliorer l'électroneutralité du faisceau ions-électrons. Alternativement ou en complément, le signal appliqué à la grille concernée pourra être un signal obtenu au moins en partie par réglage de l'amplitude des potentiels positifs et/ou négatifs issus de la source de tension alternative radiofréquence RF, 52, 58' et ce, pour améliorer l'électroneutralité du faisceau ions-électrons.

Il pourra s'agir d'un signal de forme arbitraire, par exemple rectangulaire.

En particulier, il pourra s'agir d'un signal rectangulaire tel que celui qui est représenté sur la figure 2(b), à savoir un signal rectangulaire est formé par une suite de créneaux rectangulaires positifs (b'+) et négatifs (b'-) d'amplitude (a') et de durée (d') variables. Le réglage est ainsi effectué à la fois sur la durée d'application des potentiels positifs et négatifs et sur l'amplitude de ces potentiels.

Alternativement, il pourra s'agir d'un signal sinusoïdal.

Un deuxième mode de réalisation est décrit ci-après à l'appui de la figure 9. Ce deuxième mode de réalisation peut mettre en oeuvre deux modes de fonctionnement, l'un permettant de former un faisceau quasi-neutre d'ions et d'électrons en tant que particules de charges opposées, l'autre permettant de former un faisceau quasi-neutre d'ions positifs et d'ions négatifs ou ions-ions, en tant que particules de charges opposées.

Le dispositif 100' comprend l'ensemble des moyens mis en œuvre dans le dispositif 100 selon le premier mode de réalisation.

Toutefois, le dispositif 100' comprend en outre un ensemble de moyens 32, 30, 40, 58, 80 pour former un plasma ions-ions dans la chambre 20.

Par rapport aux moyens prévus dans le dispositif 100 pour former un plasma ions-électrons, les moyens 32, 30, 40, 58, 80 comprennent notamment un réservoir 32 comportant au moins un gaz ionisable électronégatif, apte à générer des ions positifs et négatifs ainsi que des électrons, et un moyen 80 de filtrage des électrons produits par ce gaz électronégatif. Le moyen 80 produit de préférence un champ magnétique H constant, orienté transversalement par rapport à la direction de déplacement des ions et des électrons dans la chambre 20.

Le dispositif 100' comprend également une source de tension alternative dite basse fréquence LF, 56 apte à être reliée à la première grille 51 par l'intermédiaire d'un moyen 57 contrôlable pour se positionner soit sur la source radiofréquence RF, 52, soit sur la source basse fréquence LF, 56 . Par source LF, 56 basse fréquence, on entend une source émettant dans une fréquence inférieure ou égale à la fréquence plasma des ions. Il convient de noter que le moyen 57 permet également d'activer ou de désactiver le moyen de filtrage 80.

Le signal issu de cette source de tension alternative basse fréquence LF, 56 peut être obtenu au moins en partie par réglage de la durée d'application des potentiels positifs et/ou négatifs issus de cette source et ce, pour contrôler l'électroneutralité du faisceau ions-ions. Alternativement ou en complément, le signal issu de cette source de tension alternative basse fréquence LF, 56 peut être obtenu au moins en partie par réglage de l'amplitude des potentiels positifs et/ou négatifs issus de cette source et ce, pour améliorer l'électroneutralité du faisceau ions-ions.

Il pourra notamment s'agir d'un signal rectangulaire tel que celui qui est représenté sur la figure 2(b), à savoir un signal rectangulaire formé par une suite de créneaux rectangulaires positifs b'+ et négatifs b'-d'amplitude a' et de durée d' variables. Le réglage est ainsi effectué à la fois sur la durée d'application des potentiels positifs et négatifs et, sur l'amplitude de ces potentiels.

Plus généralement, une forme de signal rectangulaire peut être envisagée.

Le dispositif 100' présente donc deux modes de fonctionnement.

Dans le premier mode de fonctionnement, le moyen 57 est positionné sur la source RF, 52, en série avec le condensateur 53. Un gaz apte à générer un plasma comportant des ions positifs et des électrons est introduit dans la chambre 20, par l'intermédiaire du réservoir 31 et du conduit 30. Le moyen 80 de filtrage magnétique des électrons est rendu inactif, avec le moyen 57 lequel contrôle également l'activation ou la désactivation de ce moyen 80 de filtrage. Le fonctionnement du dispositif 100' est identique à celui qui a été décrit pour le premier mode de réalisation (dispositif 100) pour l'extraction d'ions positifs et d'électrons.

Dans le deuxième mode de fonctionnement, le moyen 57 est positionné sur la source LF, 56 et permet également d'activer le moyen 80 de filtrage. La source LF, 56 émet un signal dont la valeur est successivement positive et négative à une fréquence inférieure ou égale à la fréquence plasma des ions, pour extraire successivement les ions positifs et les ions négatifs. Un gaz électronégatif doit être introduit dans la chambre 20. Le moyen 80 de filtrage des électrons doit être activé pour éliminer ou quasiment éliminer les électrons et n'obtenir, en sortie de ce moyen 80, que ou quasiment que des ions positifs et des ions négatifs.

L'électroneutralité du faisceau obtenu en sortie est assurée.

Aucun dispositif générateur de plasma ne propose, à la connaissance du demandeur, un tel dispositif tout-en-un. En particulier, lorsque le dispositif 100' est utilisé en mode ions-ions, on peut limiter son utilisation dans le temps, en passant en mode ions positifs-électrons, pour éviter des problèmes de vieillissement précoce du matériel.

Sur la figure 9, on note que deux sources RF distinctes 58, 52 sont mises en œuvre. Pour autant, on pourrait également prévoir un schéma d'installation conforme à celui qui est représenté sur la figure 8 pour le dispositif 100', à savoir une seule source RF.

Enfin, et de manière générale, les gaz utilisables dans les dispositifs 100 ou 100' pourront être choisis, en fonction de leur électropositivité ou électronégativité, parmi l'argon (Ar), l'hydrazine ($N_2H_4$), le xénon (Xe), le tétrafluorure de carbone ($CF_4$), l'hexafluorure de soufre ($SF_6$), le diiode ($I_2$), le diazote ($N_2$) ou le dihydrogène ($H_2$).

Des tests ont été réalisés pour montrer l'intérêt de la solution proposée dans le cadre de l'invention.

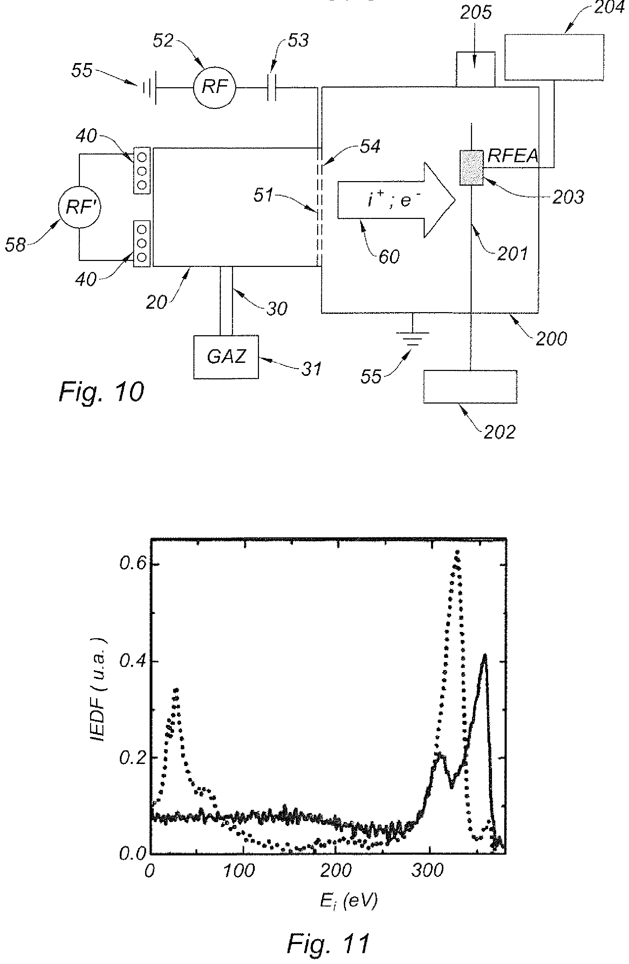

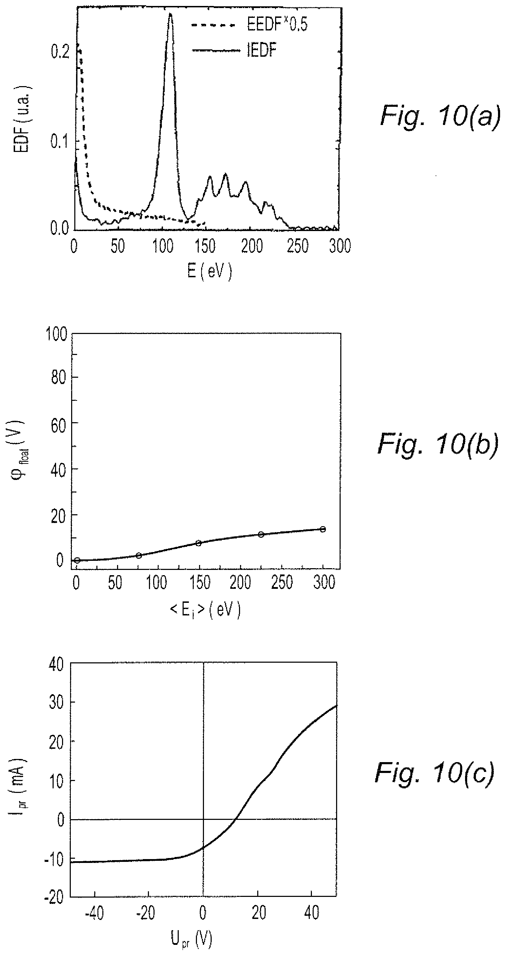

La figure 10 est un schéma représentatif d'une installation d'essais utilisée avec le dispositif 100 selon l'invention. Sur la partie gauche de cette figure 10, on reconnaît le dispositif 100 représenté sur la figure 4.

Les caractéristiques du faisceau 60 sont déterminées dans une chambre 200 mise sous vide, par l'intermédiaire d'une pompe 205. La mesure est réalisée au moyen d'une cible 201 à laquelle est associé un analyseur d'énergie 203 disposé sur la cible 201, cet analyseur étant connecté à un moyen de traitement 204. Cet analyseur est connu sous l'acronyme RFEA (« Retarding Field Energy Analysers » selon la terminologie anglo-saxonne). La cible 201 est reliée à un moyen pour déterminer son potentiel 202.

Quelques résultats sont fournis sur les figures 10(a) à 10(c), relatifs au fonctionnement ions-électrons.

Le gaz utilisé est de l'argon (25sccm).

La fréquence de la source RF, 52 est de 4MHz. Le potentiel appliqué à la grille 51 par cette source peut présenter une amplitude comprise entre 0 et 300V (à savoir jusqu'à 600V crête à crête).

Le filtre magnétique est inactif.

La figure 10(a) représente les fonctions de distribution d'énergie (EDF ; ordonnées ; unité arbitraire u.a.) pour les ions Argons (IEDF) et les électrons (EEDF) en fonction de l'énergie de ces ions/électrons (abscisse). La présence d'un pic tant pour les électrons que les ions montre qu'une extraction et une accélération des deux types de particules chargées est réalisée. Cette figure montre que les ions sont extraits et accélérés à une énergie moyenne de 150eV, et les électrons à une énergie moyenne de 10eV. Ces mesures sont obtenues avec un potentiel RF d'amplitude 150 V (300V crête à crête).

La figure 10(b) montre l'évolution du potentiel de la cible 201 (ordonnées ; $\phi_{float}$) en fonction de l'énergie moyenne des ions argon. On note que sur la gamme d'énergie des ions argon considérés pour cette mesure (0 à 300eV), le potentiel de la cible est inférieur à 15V, ce qui est faible par rapport à l'énergie des ions. En d'autres termes, cela montre que le faisceau est bien compensé sur le plan de la charge (électroneutralité assurée).

La figure 10(c) montre une courbe potentiel-courant ($U_{pr}/I_{pr}$) de la cible 201 ; pour une énergie des ions argon de 300eV. Les courants d'ions argon et d'électrons sont identiques (Ipr = 0) lorsque le potentiel de la cible est de 15V. Il convient de noter que $\phi_{float}$ vaut $U_{pr}$ lorsque $I_{pr}$ =0.

La figure 11 montre des résultats relatifs au mode de fonctionnement ion-ions. Ces résultats ont été obtenus avec une installation d'essais mettant en œuvre le dispositif 100' représenté sur la figure 9, avec les moyens de mesure pour caractériser le faisceau 60 issus de ce dispositif 100' qui ont été décrits précédemment à l'appui de la 10.

Le gaz utilisé est de l'hexafluorure de soufre (SF6).

La fréquence LF de la source 56 de tension est de 20kHz. Le potentiel appliqué à la grille reliée à la source 56 de tension est compris entre -350V et +350V.

Le filtre magnétique 80 est actif, afin d'éliminer ou quasiment éliminer les électrons produits par l'ionisation du gaz.

La figure 11 représente plus précisément les fonctions de distribution d'énergie (IEDF ; ordonnées ; unité arbitraire u.a.) pour les ions positifs (trait plein) et les ions négatifs (traits pointillés) en fonction de l'énergie de ces ions (abscisse). La présence d'un pic tant pour les électrons que les ions montre qu'une extraction et une accélération des deux types de particules chargées est réalisée. Cette figure 11 montre que les ions positifs et négatifs sont extraits et accélérés à une énergie moyenne supérieure à 300eV.

Les dispositifs 100, 100' selon l'invention peuvent notamment être utilisés pour :

- des propulseurs à plasma (application aux satellites pour de la correction de trajectoire, sondes spatiales,...),

- des dispositifs de dépôt de particules sur une cible (dépôt en phase vapeur, par exemple ; domaine de la microélectronique),
- des dispositifs de gravure de la cible,
- des dispositifs de traitement de polymères ou encore des dispositifs d'activation de la surface cible.

## Revendications

1. Dispositif (100) de formation d'un faisceau quasi-neutre d'ions et d'électrons, comprenant :

   - une chambre (20),
   - un ensemble de moyens (31, 30, 40, 58) pour former un plasma ions - électrons dans cette chambre (20) ;
   - un moyen (50) d'extraction et d'accélération des particules chargées du plasma hors de la chambre (20) aptes à former ledit faisceau, ledit moyen (50) d'extraction et d'accélération comprenant un ensemble d'au moins deux grilles (51, 54) situées à une extrémité de la chambre ;
   - une source de tension alternative radiofréquence (52, 58') adaptée pour générer un signal dont la radiofréquence est comprise entre la fréquence plasma des ions et la fréquence plasma des électrons, ladite source de tension radiofréquence (52, 58') étant disposée en série avec un condensateur (53) et connectée, par l'une de ses sorties et par l'intermédiaire de ce condensateur (53), à l'une au moins des grilles dudit ensemble d'au moins deux grilles (51,54), au moins une autre grille dudit ensemble d'au moins deux grilles (51, 54) étant soit mise à un potentiel de référence, soit connectée à l'autre des sorties de la source de tension radiofréquence (52, 58').

2. Dispositif (100) selon la revendication 1, dans lequel l'ensemble de moyens (31, 30, 40, 58) pour former le plasma ions - électrons comprend une ou plusieurs bobine(s) alimentée(s) par une source de tension alternative radiofréquence (58' ; 52).

3. Dispositif (100) selon la revendication précédente, dans lequel la source de tension radiofréquence (58') alimentant la ou chaque bobine (40) est la même que la source de tension radiofréquence (52) en série avec le condensateur qui sont connectés à l'une au moins des deux grilles (51, 54), le dispositif comprenant en outre un moyen (59) pour gérer le signal fourni par la ladite source (58') en direction d'une part, du ou de chaque bobine et d'autre part, de ladite au moins une grille.

4. Dispositif (100) selon l'une des revendications précédentes, dans lequel l'ensemble de moyens (31, 30, 40, 58) pour former le plasma ions - électrons dans la chambre (20) comprend un réservoir (31) comportant au moins un gaz électropositif.

5. Dispositif (100) selon l'une des revendications précédentes, dans lequel les grilles (51, 54) présentent des orifices circulaires, dont le diamètre est compris entre 0,5mm et 10mm, par exemple entre 1mm et 2mm.

6. Dispositif (100) selon l'une des revendications précédentes, dans lequel la distance entre les deux grilles (51, 54) est comprise entre 0,5mm et 10mm, par exemple entre 1mm et 2mm.

7. Dispositif (100) selon l'une des revendications 1 à 4, dans lequel les grilles (51, 54) présentent des orifices en forme de fente.

8. Dispositif (100) selon l'une des revendications précédentes, dans lequel l'électroneutralité du faisceau d'ions et d'électrons est obtenue au moins en partie par réglage de la durée d'application des potentiels positifs et/ou négatifs issus de la source de tension alternative radiofréquence (RF, 52, 58').

9. Dispositif (100) selon l'une des revendications 1 à 7, dans lequel l'électroneutralité du faisceau d'ions et d'électrons est obtenue au moins en partie par réglage de l'amplitude des potentiels positifs et/ou négatifs issus de la source de tension alternative radiofréquence (RF, 52, 58').

10. Dispositif (100) selon l'une des revendications précédentes, dans lequel la source de tension alternative radiofréquence (RF, 52, 58') est agencée pour produire un signal rectangulaire.

11. Dispositif (100) selon l'une des revendications 1 à 7, dans lequel la source de tension alternative radiofréquence (RF, 52, 58') est agencée pour produire un signal sinusoïdal.

12. Dispositif de formation d'un faisceau quasi-neutre de particules de charges opposées, **caractérisé en ce qu'**il comprend:

- un dispositif (100) de formation d'un faisceau quasi-neutre d'ions et d'électrons selon l'une des revendications précédentes ;
- un ensemble de moyens (32, 30, 40, 58, 80) pour former un plasma ions-ions dans la chambre (20), ledit ensemble comportant un moyen (80) de filtrage des électrons;
- une source (LF, 56) de tension alternative dite basse fréquence qui est adaptée pour générer un signal dont la radiofréquence est inférieure ou égale à la fréquence plasma des ions;
- un moyen (57) apte à connecter l'une des grilles (51, 54) soit, à la source de tension basse fréquence (LF; 56) tout en activant le moyen (80) de filtrage des électrons afin de former un faisceau ions-ions soit, à la source de tension radiofréquence (52, 58) en série avec le condensateur (53) tout en désactivant le moyen (80) de filtrage des électrons pour former un faisceau ions-électrons.

13. Dispositif (100') selon la revendication précédente, dans lequel l'électroneutralité du faisceau ions-ions est obtenue au moins en partie par réglage de la durée d'application des potentiels positifs et/ou négatifs issus de la source de tension alternative basse fréquence (LF, 56).

14. Dispositif (100') selon l'une des revendications 12 ou 13, dans lequel l'électroneutralité du faisceau ions-ions est obtenue au moins en partie par réglage de l'amplitude des potentiels positifs et/ou négatifs issus de la source de tension alternative basse fréquence (LF, 56).

15. Dispositif (100') selon la revendication précédente, dans lequel la source de tension alternative basse fréquence (LF, 56) est agencée pour produire un signal rectangulaire.

16. Dispositif (100') selon l'une des revendications 12 à 15, dans lequel l'ensemble de moyens (32, 30, 40, 58, 80) pour former un plasma ions-ions dans la chambre (20) comprend un réservoir (32) comportant au moins un gaz électronégatif.

17. Dispositif (100, 100') selon l'une des revendications précédentes, dans lequel les gaz utilisables sont choisis, en fonction de leur électropositivité ou électronégativité, parmi l'argon (Ar), i'hydrazine ($N_2H_4$), le xénon (Xe), le tétra-fluorure de carbone ($CF_4$), l'hexafluorure de soufre ($SF_6$), le diiode ($I_2$), le diazote ($N_2$) ou le dihydrogène ($H_2$).

**Patentansprüche**

1. Vorrichtung (100) zur Formung eines quasi-neutralen Strahls von Ionen und Elektronen mit

- einer Kammer (20),
- einer Gesamtheit von Mitteln (31, 30, 40, 58) zum Bilden eines Ionen-Elektronen-Plasmas in dieser Kammer (20),
- einem Mittel (50) zum Extrahieren und Beschleunigen der zum Bilden des Strahls geeigneten geladenen Partikel des Plasmas aus der Kammer (20) heraus, wobei das Mittel (50) zum Extrahieren und Beschleunigen eine Gesamtheit von wenigstens zwei an einem Ende der Kammer gelegenen Gittern (51, 54) aufweist,
- einer Hochfrequenz-Wechselspannungsquelle (52, 58'), die dazu geeignet ist, ein Signal zu erzeugen, dessen Hochfrequenz zwischen der Plasmafrequenz der Ionen und der Plasmafrequenz der Elektronen liegt, wobei die Hochfrequenz-Wechselspannungsquelle (52, 58') mit einem Kondensator (53) in Reihe angeordnet ist und mit einem ihrer Ausgänge und über diesen Kondensator (53) mit wenigstens einem der Gitter der Gesamtheit von wenigstens zwei Gittern (51, 54) verbunden ist, wobei ein weiteres Gitter der Gesamtheit von wenigstens zwei Gittern (51, 54) entweder auf ein Bezugspotential gelegt ist oder mit dem anderen der Ausgänge der Hochfrequenz-Wechselspannungsquelle (52, 58') verbunden ist.

2. Vorrichtung (100) gemäß Anspruch 1, bei der die Gesamtheit von Mitteln (31, 30, 40, 58) zum Bilden des Ionen-Elektronen-Plasmas eine oder mehrere durch eine Hochfrequenz-Wechselspannungsquelle (58' ; 52) versorgte Spule(n) aufweist.

3. Vorrichtung (100) gemäß dem vorangehenden Anspruch, bei der die die oder jede Spule (40) versorgende Hochfrequenz-Spannungsquelle (58') die gleiche ist wie die mit dem Kondensator in Reihe liegende Hochfrequenz-Spannungsquelle (52), die mit wenigstens einem der beiden Gitter (51, 54) verbunden sind, wobei die Vorrichtung außerdem ein Mittel (59) zum Erzeugen des Signals aufweist, das von der Quelle (58') einerseits an die Spule bzw. an jede Spule und andererseits an das wenigstens eine Gitter abgegeben wird.

4. Vorrichtung (100) gemäß einem der vorangehenden Ansprüche, bei der die Gesamtheit von Mitteln (31, 30, 40, 58) zum Bilden des Ionen-Elektronen-Plasmas in der Kammer (20) einen wenigstens ein elektropositives Gas enthaltenden Tank (31) aufweist.

5. Vorrichtung (100) gemäß einem der vorangehenden Ansprüche, bei der die Gitter (51, 54) kreisförmige Löcher aufweisen, deren Durchmesser zwischen 0,5 mm und 10 mm, zum Beispiel zwischen 1 mm und 2 mm, beträgt.

6. Vorrichtung (100) gemäß einem der vorangehenden Ansprüche, bei der der Abstand zwischen den beiden Gittern (51, 54) zwischen 0,5 mm und 10 mm, zum Beispiel zwischen 1 mm und 2 mm, beträgt.

7. Vorrichtung (100) gemäß einem der Ansprüche 1 bis 4, bei der die Gitter (51, 54) Löcher in Form eines Schlitzes aufweisen.

8. Vorrichtung (100) gemäß einem der vorangehenden Ansprüche, bei der die Elektroneutralität des Strahls aus Ionen und Elektronen wenigstens teilweise durch Regeln der Dauer des Anlegens der aus der Hochfrequenz-Wechselspannungsquelle (RF, 52, 58') kommenden positiven und/oder negativen Potentiale erhalten wird.

9. Vorrichtung (100) gemäß einem der Ansprüche 1 bis 7, bei der die Elektroneutralität des Strahls aus Ionen und Elektronen wenigstens teilweise durch Regeln der Amplitude der aus der Hochfrequenz-Wechselspannungsquelle (RF, 58') kommenden positiven und/oder negativen Potentiale erhalten wird.

10. Vorrichtung (100) gemäß einem der vorangehenden Ansprüche, bei der die Hochfrequenz-Wechselspannungsquelle (RF, 52, 58') dazu ausgelegt ist, ein Rechtecksignal zu erzeugen.

11. Vorrichtung (100) gemäß einem der Ansprüche 1 bis 7, bei der die Hochfrequenz-Wechselspannungsquelle (RF, 52, 58') dazu ausgelegt ist, ein Sinussignal zu erzeugen.

12. Vorrichtung zur Formung eines quasi-neutralen Strahls von gegensätzlich geladenen Partikeln, **dadurch gekennzeichnet, daß** sie

    - eine Vorrichtung (100) zur Formung eines quasi-neutralen Strahls von Ionen und Elektronen gemäß einem der vorangehenden Ansprüche,
    - eine Gesamtheit von Mitteln (32, 30, 40, 58, 80) zum Bilden eines Ionen-Ionen-Plasmas in der Kammer (20), wobei die Gesamtheit ein Mittel (80) zum Filtern der Elektronen aufweist,
    - eine sogenannte Niederfrequenz-Wechselspannungsquelle (LF, 56), die dazu ausgelegt ist, ein Signal zu erzeugen, dessen Hochfrequenz kleiner als oder gleich der Plasma-Frequenz der Ionen ist,
    - ein Mittel (57), das dazu ausgelegt ist, eins der Gitter (51, 54) entweder an die Niederfrequenz-Spannungsquelle (LF; 56) anzulegen und dabei das Mittel (80) zum Filtern der Elektronen zu aktivieren, um einen Ionen-Ionen-Strahl zu bilden, oder an die Hochfrequenz-Spannungsquelle (52, 58) in Reihe mit dem Kondensator (53) anzulegen und dabei das Mittel (80) zum Filtern der Elektronen zu deaktivieren, um einen Ionen-Elektronen-Strahl zu bilden,

aufweist.

13. Vorrichtung (100') gemäß dem vorangehenden Anspruch, bei der die Elektroneutralität des Ionen-Ionen-Strahls wenigstens teilweise durch Regeln der Dauer des Anlegens der aus der Niederfrequenz-Wechselspannungsquelle (LF, 56) kommenden positiven und/oder negativen Potentiale erhalten wird.

14. Vorrichtung (100') gemäß einem der Ansprüche 12 oder 13, bei der die Elektroneutralität des Ionen-Ionen-Strahls wenigstens teilweise durch Regeln der Amplitude der aus der Niederfrequenz-Wechselspannungsquelle (LF, 56) kommenden positiven und/oder negativen Potentiale erhalten wird.

**15.** Vorrichtung (100') gemäß dem vorangehenden Anspruch, bei der die Niederfrequenz-Wechselspannungsquelle (LF, 56) dazu ausgelegt ist, ein Rechtecksignal zu erzeugen.

**16.** Vorrichtung (100') gemäß einem der Ansprüche 12 bis 15, bei der die Gesamtheit von Mitteln (32, 30, 40, 58, 80) zum Erzeugen eines Ionen-Ionen-Plasmas in der Kammer (20) einen wenigstens ein elektropositives Gas enthaltenden Tank (32) aufweist.

**17.** Vorrichtung (100, 100') gemäß einem der vorangehenden Ansprüche, bei der die verwendbaren Gase in Abhängigkeit von deren Elektropositivität oder Elektronegativität aus Argon (Ar), Hydrazin ($N_2H_4$), Xenon (Xe), Tetrafluormethan ($CF_4$), Schwefelhexafluorid ($SF_6$), Di-Jod ($I_2$), Di-Stickstoff ($N_2$) oder Di-Wasserstoff ($H_2$).

**Claims**

**1.** A device (100) for forming a quasi-neutral beam of ions and electrons, comprising:

- a chamber (20),
- a set of means (31, 30, 40, 58) for forming an ion-electron plasma in this chamber (20);
- a means (50) for extracting and accelerating charged particles of the plasma out of the chamber (20) able to form said beam, said extraction and acceleration means (50) comprising a set of at least two grids (51, 54) located at one end of the chamber;
- a radiofrequency alternating voltage source (52, 58') adapted for generating a signal, the radiofrequency of which is comprised between the plasma frequency of the ions and the plasma frequency of the electrons, said radiofrequency voltage source (52, 58') being positioned in series with a capacitor (53) and connected, through one of its outlet and via this capacitor (53), to at least one of the grids of said set of at least two grids (51, 54), at least one other grid of said set of at least two grids (51, 54) either being set to a reference potential, or connected to the other one of the outlets of the radiofrequency voltage source (52, 58').

**2.** The device (100) according to claim 1, wherein the set of means (31, 30, 40, 58) for forming the ion-electron plasma comprises one or several coils powered by a radiofrequency alternating voltage source (58'; 52).

**3.** The device (100) according to the preceding claim, wherein the radiofrequency voltage source (58') powering said or each coil (40) is the same as the radiofrequency voltage source (52) in series with the capacitor which are connected to at least one of the two grids (51, 54), the device further comprising a means (59) for handling the signal provided by said source (58') towards said or each coil on the one hand and towards said at least one grid on the other hand.

**4.** The device (100) according to one of the preceding claims, wherein the set of means (31, 30, 40, 58) for forming the ion-electron plasma in the chamber (20) comprises a tank (31) including at least one electropositive gas.

**5.** The device (100) according to one of the preceding claims, wherein the grids (51, 54) have circular orifices, the diameter of which is comprised between 0.5 mm and 10 mm, for example between 1 mm and 2 mm.

**6.** The device (100) according to one of the preceding claims, wherein the distance between both grids (51, 54) is comprised between 0.5 mm and 10 mm, for example between 1 mm and 2 mm.

**7.** The device (100) according to one of claims 1 to 4, wherein the grids (51, 54) have slot-shaped orifices.

**8.** The device (100) according to one of the preceding claims, wherein the electro-neutrality of the beam of ions and electrons is at least partly obtained by adjusting the period of application of the positive and/or negative potentials stemming from the radiofrequency alternating voltage source (RF, 52, 58').

**9.** The device (100) according to one of claims 1 to 7, wherein the electro-neutrality of the beam of ions and electrons is obtained at least partly by adjusting the amplitude of the positive and/or negative potentials stemming from the radiofrequency alternating voltage source (RF, 52, 58').

**10.** The device (100) according to one of the preceding claims, wherein the radiofrequency alternating voltage source (RF, 52, 58') is laid out so as to produce a rectangular signal.

**11.** The device (100) according to one of claims 1 to 7, wherein the radiofrequency alternating voltage source (RF, 52, 58') is laid out so as to produce a sinusoidal signal.

**12.** A device for forming a quasi-neutral beam of oppositely charged particles, **characterized in that** it comprises:

- a device (100) for forming a quasi-neutral beam of ions and electrons according to one of the preceding claims;
- a set of means (32, 30, 40, 58, 80) for forming an ion-ion plasma in the chamber (20), said set including a means (80) for filtering out electrons;
- a so called low frequency alternating voltage source (LF, 56) which is adapted for generating a signal, the radiofrequency of which is less than or equal to the plasma frequency of the ions;
- a means (57) able to connect one of the grids (51, 54) either to the low frequency voltage source (LF; 56) while activating the means (80) for filtering out electrons in order to form an ion-ion beam, or to the radiofrequency voltage source (52, 58) in series with the capacitor (53) while deactivating the means (80) for filtering out electrons in order to form an ion-electron beam.

**13.** The device (100') according to the preceding claim, wherein the electro-neutrality of the ion-ion beam is at least partly obtained by adjusting the period of application of the positive and/or negative potentials stemming from the low frequency alternating voltage source (LF, 56).

**14.** The device (100') according to one of claims 12 or 13, wherein the electro-neutrality of the ion-ion beam is at least partly obtained by adjusting the amplitude of the positive and/or negative potentials stemming from the low frequency alternating voltage source (LF, 56).

**15.** The device (100') according to the preceding claim, wherein the low frequency alternating voltage source (LF, 56) is laid out so as to produce a rectangular signal.

**16.** The device (100') according to one of claims 12 to 15, wherein the set of means (32, 30, 40, 58, 80) for forming an ion-ion plasma in the chamber (20) comprises a tank (32) including at least one electronegative gas.

**17.** The device (100, 100') according to one of the preceding claims, wherein the gases which may be used are selected, according to their electropositivity or electronegativity, from among argon (Ar), hydrazine ($N_2H_4$), xenon (Xe), carbon tetrafluoride ($CF_4$), sulphur hexafluoride ($SF_6$), di-iodine ($I_2$), dinitrogen ($N_2$) or dihydrogen ($H_2$).

Fig. 1
( Art Antérieur )

Fig. 2(a)
( Art Antérieur )

Fig. 2(b)
( Art Antérieur )

RF'

12

Gaz

11

7'

1

9

10

RF

8

8

## Fig. 3
## ( Art Antérieur )

Gaz 31

30

100

50

40

54

60

RF'

51

$i^+$
$e^-$

$i^+, e^-$

58

40

20

55

RF

55

52

53

## Fig. 4

Fig. 5

Fig. 6

Fig. 7

Fig. 8

Fig. 9

*Fig. 10*

*Fig. 11*

Fig. 10(a)

Fig. 10(b)

Fig. 10(c)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007065915 A
- WO 2010060887 A
- WO 2012042143 A
- WO 20121042143 A

**Littérature non-brevet citée dans la description**

- **S.V. DUDIN ; D.V. RAFALSKYI.** On the simultaneous extraction of positive ions and electrons from single-grid ICP source. *A letters Journal Exploring the frontiers of Physics, EPL,* 2009, vol. 88 (55002), 1, , 4